# EUROPEAN PATENT APPLICATION

(11) **EP 0 550 837 A1**
(43) Date of publication of application: **14.07.1993**
(21) Application number: 92120911.0
(22) Date of filing: 08.12.1992
(51) Int. Cl.: G03B 27/46, G03B 27/62

(54) **Photographic printer**

(30) Priority: 09.12.1991 JP 324847/91
(71) Applicant: FUJI PHOTO FILM CO., LTD., Kanagawa (JP)
(72) Inventor: Hayashi, Ryoichi, c/o Fuji Photo Film Co., Ltd., Minato-ku, Tokyo (JP)
(74) Representative: Grünecker, Kinkeldey, Stockmair & Schwanhäusser Anwaltssozietät

(57) **Abstract**

Wide print designation data is recorded in an IC memory card (11) in association with each original frame to be printed in a wide print size. An IC card reader (10) reads the wide print designation data from the IC memory card. In accordance with the wide print designation data, the print magnification and the opening size of a paper mask (32) are changed so as to print an image contained in a part of the original frame on a print frame which corresponds to a print aspect ratio of the designated wide size print, at an enlarged print magnification compared with the print magnification used for making a standard size print. The amount by which the photographic paper is transported after each printing is also changed in accordance with the designated print size.

## Description

### Background of the Invention

### 1. Field of the Invention

The present invention relate to a photographic printer, and more particularly to a photographic printer by which standard size prints and wide size prints can be made.

### 2. Related Art

Recently, many types of compact cameras have been produced. For the purpose of making the camera compact, the focal length of the taking lens tends to be shorter, so that the angle of view of the compact cameras are mostly wide. For this reason, it often occurs that a primary subject of a frame is taken smaller than expected. As a result, the finished photograph lacks appealing power or verve.

To solve this problem, indeed it is possible to use a large print magnification so as to make the size of the primary subject bigger with respect to the whole area of the frame, but the wide scope of the scene is diminished instead.

### Summary of the Invention

In view of the foregoing, an object of the invention is to provide a photographic printer by which appealing photographic prints having an enlarged primary subject can be easily obtained without diminishing the wide scope of the scene.

To solve the above and other objects, a photographic printer of the invention is provided with a device for inputting a selection signal for selecting one of a standard size and at least a special print size, such as a wide print size, for printing an original frame, and wherein the print magnification, the opening size of a paper mask and the transport amount of the photographic paper are changed in accordance with the selection signal.

According to the present invention, it becomes possible to make wide size prints as well as standard size prints at ease. Therefore, the photographic printer of the invention makes it possible to enlarge the primary subject in a wide scope scene, and hence to obtain verve photographs, compared with such a photographic printer which can only perform trimming print, even if the original frames are photographed by a compact camera.

According to a preferred embodiment, the paper mask is constructed by only a pair of mask members for masking out the photographic paper in the paper transport direction. Therefore, it is unnecessary to change the opening size of a film mask in accordance with the print size. Furthermore, the size of photographic prints is changed by controlling the opening size of the paper mask in the paper transport direction, while maintaining the size of the photographic prints in the direction of the width of the photographic paper unchanged. Therefore, it is unnecessary to change the paper size for the wide size printing.

### Brief Description of the Drawings

Other objects and advantages of the present invention will become apparent in the following detailed description of the preferred embodiments when read in connection with the accompanying drawings, wherein like reference numerals designates like or corresponding parts throughout the several views, and wherein:
Figure 1 schematically shows a photographic printer according to an embodiment of the invention;
Figure 2 is a perspective view of a paper mask of the photographic printer;
Figure 3 is an explanatory view showing a negative film and photographic prints having different sizes made from the negative film;
Figure 4 is a view similar to Fig.3, but showing photographic prints having other wide vision sizes which are made from a negative film; and
Figure 5 shows essential parts of a photographic printer according to another embodiment of the invention.
Fig. 6 is a view being similar to Fig. 4 and illustrating another preferred embodiment.

### Detailed Description of the Preferred Embodiment

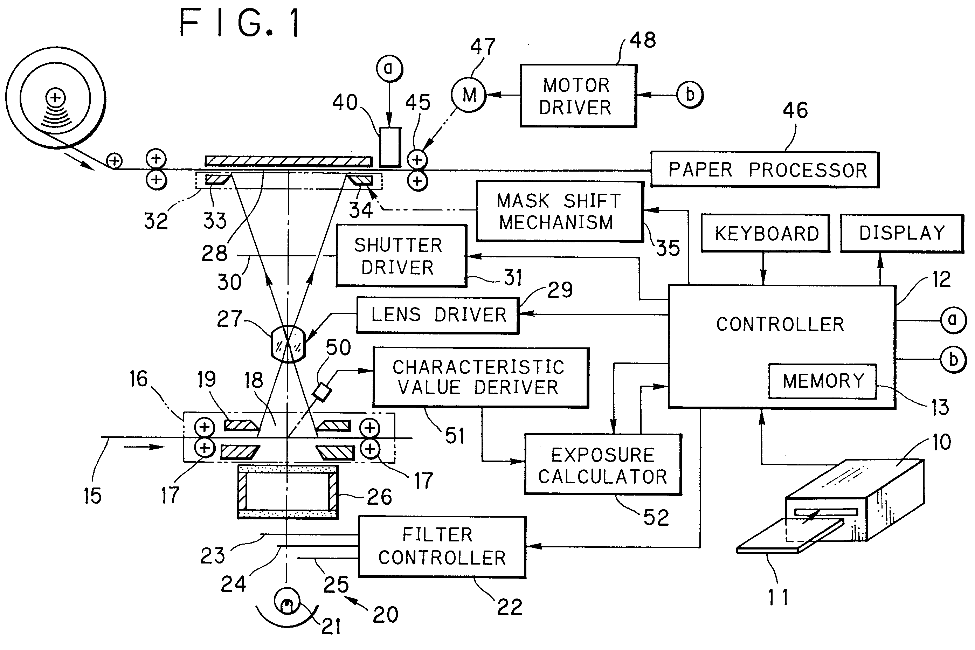

In Fig.1 showing a schematic view of a photographic printer, an IC card reader 10 is attached with an IC memory card 11 for printing. During negative inspection which is performed prior to printing, not only negative inspection data of the respective original frame to be printed are recorded in the IC memory card 11, but also print size designation data are recorded in the IC memory card, for example, with reference to print sizes written in an order bill. The IC card reader 10 reads out the negative inspection data and the print size designation data from the IC memory card, and stores these data in a memory 13 of a controller 12. A developed photographic film, for example, negative film 15 is set in a conventional film carrier 16. A pair of film feed rollers 17 are disposed in the film carrier 16, for setting each original frame to be printed in an exposure position 18. A film mask 19 is disposed in the exposure position 18. The film mask 19 is retreated upward from the negative film 15 while the negative film 15 is transported, and moves downward when printing, so as to press a periphery of the original frame to be printed, for maintaining the film surface even. According to the present embodiment, the film mask 19 corresponds to a 35 mm full size frame, and is used commonly for making standard size prints, for instance, L-size prints (89 x 130 mm in size; aspect ratio 1.46), and wide size prints, for instance, wide vision size prints (89 x 158 mm in size; aspect ratio 1.78).

A conventional light source section 20 is disposed below the film carrier 16. The light source section 20 is constructed by a light source 21, a filter controller 22, a mixing box 26 for diffusing and equalizing print light passing through color filters 23 to 25. A zoom lens 27 is disposed above the film carrier 16, for focusing an image of the original frame set in the film carrier 16 onto a photosensitive emulsion surface of photographic paper 28. The zoom lens 27 is driven by a lens driver 29. The lens driver 29 sets a print magnification of the zoom lens 27 in accordance with a print magnification signal from the controller 12. A shutter 30, which is controlled by a shutter driver 31, is disposed between the zoom lens 27 and the photographic paper 28. A paper mask 32 is disposed on the photographic paper 28 in the print position.

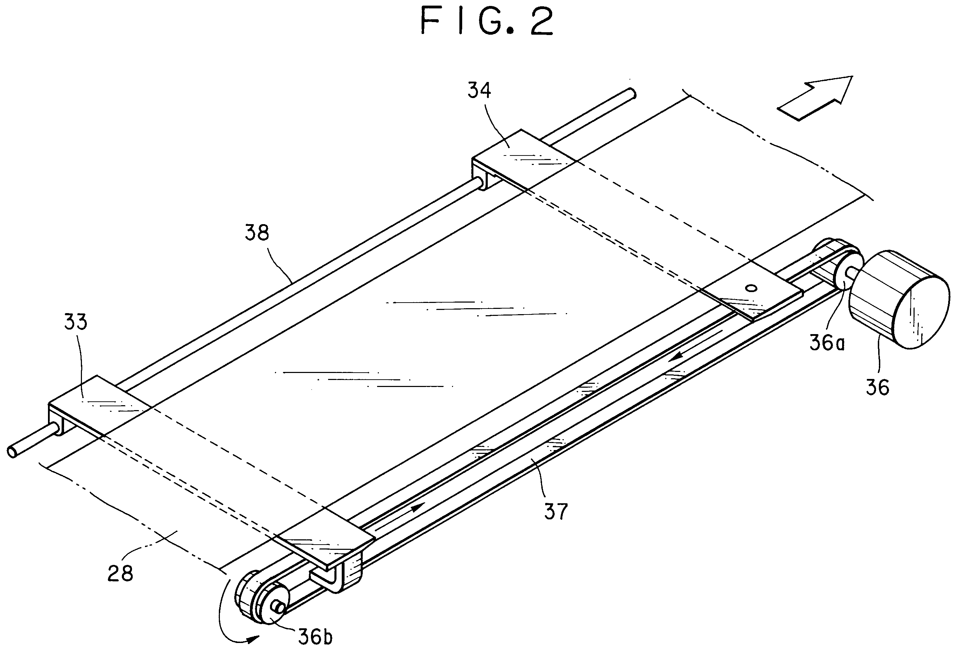

As shown in Fig.2, the paper mask 32 is constructed by mask members 33 and 34, which are movable by a mask shift mechanism 35 in a paper transport direction so as to define leading and trailing margin of each print frame with respect to the paper transport direction. Mask members for defining the margins of the print frame in a direction of the width of the photographic paper are omitted, so that the construction of the paper mask is simplified. The mask shift mechanism 35 is constructed by a motor 36, a pair of pulleys 36a and 36b rotated by the motor 36, an endless belt 37 transported by the pulleys 36a and 36b, and a guide rod 38 for guiding the mask members 33 and 34 parallel to the paper transport direction. The motor 36 is rotated bi-directionally, thereby to move the endless belt 37 such that the mask members 33 and 34 move close to each other, as shown by arrows, when the motor 36 rotates the pulleys 36a and 36b in a direction shown by an arrow, whereas the mask members 33 and 34 move apart from each other when the motor 36 rotates in a reverse direction. In this way, the mask members 33 and 34 are moved symmetrically with respect to the center of the print frame in the paper transport direction, so as to be set in predetermined positions.

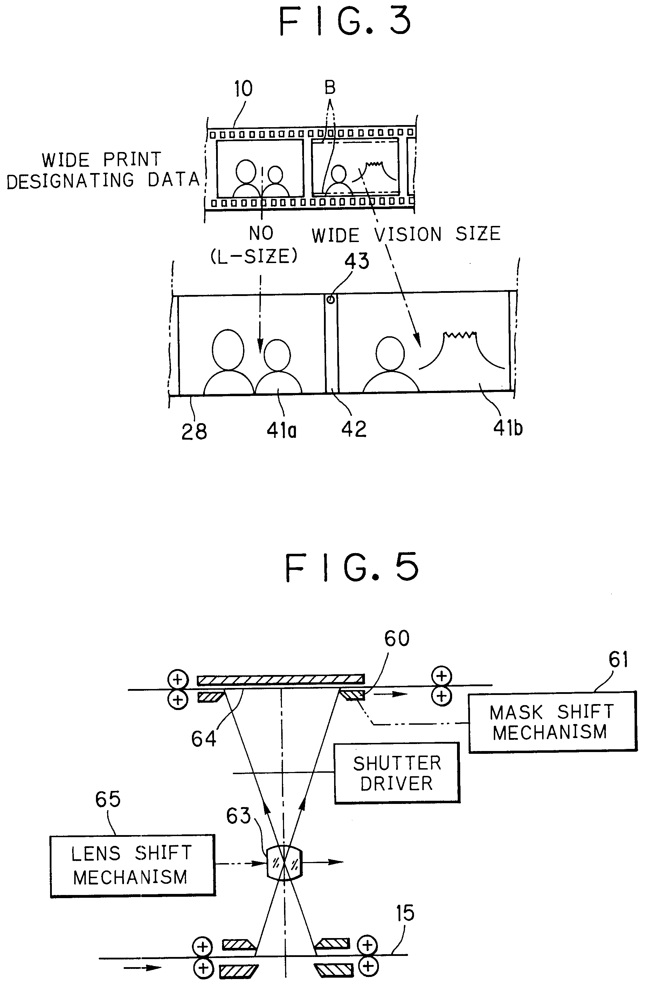

Furthermore, a conventional puncher 40 is provided at a paper exit of the paper mask 32, as shown in Fig.1. The puncher 40 punches out a cut mark 43 in the form of a hole in a space 42 between a print frame 41a and an adjacent print frame 41b on the photographic paper 28, as shown in Fig.3. Also a pair of paper feed rollers 45 are disposed at the paper exit of the paper mask 32, for feeding exposed portion of the photographic paper 28 to a conventional paper processor 46. The paper feed rollers 45 are rotated by a motor 47. The rotation of the motor 47 is controlled by the controller 12 through a motor driver 48, such that the photographic paper 28 is transported by a first amount corresponding to the length (130 mm) of the L-size print after the standard size printing, and by a second amount corresponding to the length (158 mm) of the wide vision size print after the wide size printing. The paper processor 46 guides the photographic paper 28 into respective developing tanks for photographic processing of the photographic paper and, after drying the photographic paper 28, cuts the photographic paper 28 into individual prints with reference to the cut marks 43.

A scanner 50 is disposed diagonally above the film carrier 16. The scanner 50 measures each pixel of the original frame to be printed by conventional three color separation method. Photometric data is sent from the scanner 50 to a characteristic value calculator 51, wherein various characteristic values necessary for exposure calculation are derived. An exposure calculator 52 calculates a print exposure amount for the original frame to be printed in accordance with a conventional equation for exposure calculation, on the basis of the various characteristic values, photographic data from the controller 12, and exposure correction data entered during the negative inspection. The controller 12 determines set positions for the respective color filters 23 to 25 based on the calculated print exposure amount, and controls the filter controller 22 so as to set the color filters 23 to 25 correspondingly, in a conventional manner, thereby controlling intensity and color balance of the print light. As for those original frames to which the wide size printing is designated by the print size data, the controller 12 sends exposure correction data, which is predetermined based on test printing in the wide vision size and stored in the memory 13, to the exposure calculator 52.

The controller 12 also sets a print magnification of the zoom lens 27 for the original frame to be printed in the wide vision size, and moves each of the mask members 33 and 34 of the paper mask 32 to a given position, so as to form an opening corresponding to the wide vision size. After setting the respective elements of the photographic printer in accordance with the above-described print data, the filter controller 22 is driven to control the quality of the print light, and the shutter 30 is opened for a given time so as to print an image of the original frame. Thereafter, the photographic paper 28 and the negative film 15 are transported by one frame, and the same printing operation is executed for the next original frame.

Fig.3 shows an example of the standard size print, that is, the L-size print 41a in this embodiment, made from the original frame having no print size data, and an example of the wide vision size print 41b made from the original frame which is designated to be printed in the wide vision size by the print size data. As for the original frame having no print size data, the whole area of the 35 mm full size frame is printed in the L-size (89 x 130 mm). If the print size data designating the wide size printing is allocated to the original frame, an image contained in a portion of the original frame which is disposed between upper and lower lines B is printed on the photographic paper 28 in the wide vision size (89 x 158 mm).

As described above, the film mask 19 and the photographic paper 28 are used without any change after the print size is changed. Only the transport amount of the photographic paper and the paper mask are adjusted to the print size.

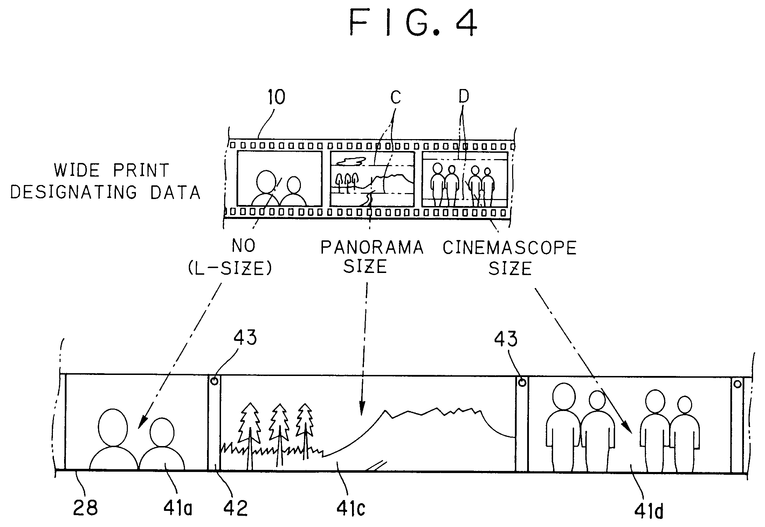

Although the photographic printer of the above-described embodiment can make wide vision size prints other than L-size prints, the size of photographic prints is not limited to these sizes. For example, it is possible to designate a panorama size or a cinemascope size. In this case, the print magnification, the paper mask position and the exposure correction amount should be changed according to the print size. Fig.4 shows an example of these wide size prints 41c and 41d. The panorama size print 41c (89 x 254 mm; aspect ratio 2.85) is made by printing an image contained in a part of the original frame which is disposed between lines C. The cinemascope size print 41d (89 x 205 mm; aspect ratio 2.30) is made by printing an image contained in a part of the original frame which is disposed between lines D. Moreover, it is possible to designate a square size print (89 x 89 mm; aspect ratio 1.0).

Although the print size data is manually entered through a keyboard or the like, and is recorded in the IC memory card 11, during the negative inspection, in the above-described embodiment, it is possible to provide a magnetic recording layer on the negative film 15 and record the print size data on the magnetic recording layer. It is also possible to record the print size data photographically on the negative film 15 in the form of an optical mark. The print size data may be recorded by a camera having an IC memory card recording device or a magnetic recording device or an optical data recording device, at the time of photographing, or by a suitable device at the time of print order receipt.

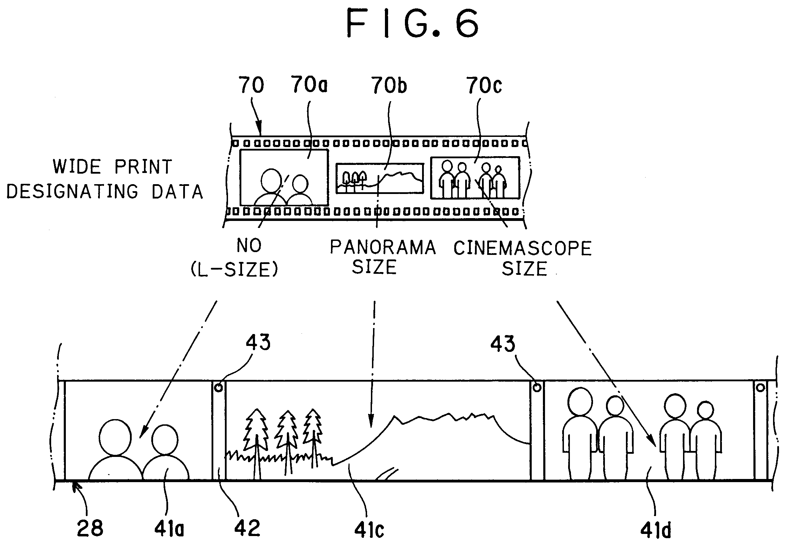

In the former embodiment, photoprints different in the printing aspect ratio are made by trimming original frames having the same size. However, photoprints may be made as desired from original frames which are created originally to have the printing aspect ratio. Fig. 6 illustrates negative film 70 on which there are formed a full size original frame 70a, a panorama size original frame 70b, a cinemascope size original frame 70c, and the like. The original frames 70a to 70c are used for making photoprints 41a, 41c and 41d which have aspect ratios respectively equal to the original frames 70a to 70c. Adapted to formation of the original frames 70a to 70c, a camera is provided with a mechanical changeable mask and a liquid crystal panel disposed within a exposure chamber thereof. The present embodiment is characterized in that a size to be printed can be determined from the size of a particular original frame, so that it is possible without an instruction from a customer that an operator recognizes the size to be printed, when he inspects the negative film, and writes print size data into an LSI card or a magnetic recording layer of the film.

Furthermore, although the above-described embodiment changes the print magnification by using the zoom lens 27, it is possible to change the print magnification by using a lens turret.

Although the opening size of the paper mask 32 is changed by moving the mask members 33 and 34 symmetrically with respect to the center of the print frame, it is also possible to move only a mask member 60 disposed in one side of the print frame in a direction to transport photographic paper 64, as shown in Fig.5. In this embodiment, the mask member 60 is moved by a mask shift mechanism 61, and a zoom lens 63 is also moved by a lens shift mechanism 65 parallel to the paper transport direction, so as to perform printing by using the swing & tilt method, strictly speaking, the shift & rise-fall method. Thereby, the image formed on the photographic paper 64 does not suffer distortion.

It can be preferably during transportation of the photographic paper to change the print size and the print magnification, to exchange the film mask and to set a channel, so that the photographic paper can be printed rapidly. After printing one frame, further, the print size for the following frame can be taken into consideration for an amount of transporting the photographic paper. Therefore, no waste of space takes place on paper between successive frames, and the photographic paper needs no reverse movement for positioning a frame so as to avoid a loss of time to position a frame.

Thus, it will be understood that the present invention is not intended to be limited to the above described embodiment but, on the contrary, various modifications of the invention can be effected without departing from the scope and spirit of the appended claims.

## Claims

1. A photographic printer for making different size prints from original frames recorded in the same size on a photographic film, said photographic printer having a print lens and a paper mask for defining a print frame size on a photographic paper, said photographic printer comprising:
first means (10) for inputting a selection signal for selecting one of a standard size and at least a special print size for making a photographic print from an original frame;
second means (12, 27, 29) for changing the print magnification in accordance with said selection signal;
third means (12, 33, 34, 35; 61) for changing the size of an opening of said paper mask in accordance with said selection signal;
fourth means (12, 45, 47, 48) for changing the amount by which the photographic paper are transported after each printing in accordance with said selection signal.

2. A photographic printer as recited in claim 1, wherein the paper mask (32, 60) is constructed by a pair of mask members (33, 34; 60) which mask out the photographic paper (28) in the paper transport direction, and said third means (12, 33, 34, 35; 61) moves at least one of said mask members (33, 34; 60) in the paper transport direction, so as to form a print frame (41a, 41b, 41c, 41d) having an aspect ratio corresponding to the print size selected by said selection signal, while maintaining the size of the print frame in the direction of the width of the photographic paper (28, 64).

3. A photographic printer as recited in claim 2, wherein said fourth means (12, 45, 47, 48) includes feed rollers (45), a motor (47) for rotating said feed rollers and a motor driver (48) controlled by a controller (12) of the photographic printer so as to transport the photographic paper (28, 64) by an amount corresponding to the size of the print frame, which has been made from the original frame, in the paper transport direction.

4. A photographic printer as recited in claim 3, wherein said first means includes a data reader (10) for reading print size data representing a print size from a recording medium (11) and outputting said selection signal based on said print size data to said controller (12).

5. A photographic printer as recited in claim 4, wherein said data reader is an IC card reader (10) and said recording medium is an IC memory card (11) in which said print size data is recorded in association with each original frame to be printed.

6. A photographic printer as recited in claim 4, wherein said second means includes a zoom lens (27) and a lens driver (29) for changing the focal length of said zoom lens under the control of said controller (12).

7. A photographic printer as recited in claim 4, wherein said standard size has an aspect ratio 1.46 which corresponds to a full size frame of a 35 mm format photographic film, and said special print size includes at least one of a wide vision size having an aspect ratio 1.78, a panoramic size having an aspect ratio 2.85, and a cinemascope size having an aspect ratio 2.30.

8. A photographic printer as recited in claim 7, wherein said mask members (33, 34) are movable parallel to the paper transport direction, symmetrically with respect to the center of the print frame (41a, 41b, 41c, 41d).

9. A photographic printer as recited in claim 7, wherein one of said mask members (60) is movable in the paper transport direction, and the photographic printer further comprises a lens shift mechanism (65) for shifting said print lens (63) in a direction parallel to the paper transport direction in cooperation with said one mask member (60) by an amount determined in accordance with the amount of movement of said one mask member.

10. A photographic printer for making different size prints from photographic film having original frames recorded in different sizes, said photographic printer having a print lens and a paper mask for defining a print frame size on a photographic paper, said photographic printer comprising:
first means for inputting a selection signal for selecting one of a standard size and at least a special print size for making a photographic print from an original frame;
second means for changing the print magnification in accordance with said selection signal;
third means for changing the size of an opening of said paper mask in accordance with said selection signal;
fourth means for changing the amount by which the photographic paper are transported after each printing in accordance with said selection signal.
